# EUROPEAN PATENT APPLICATION

(11) **EP 3 909 751 A1**
(43) Date of publication of application: **17.11.2021**
(21) Application number: 21460012.4
(22) Date of filing: 03.02.2021
(51) Int. Cl.: B29C 65/56, B29C 65/78, F16B 5/00, B29D 99/00, B29C 65/48, B29C 65/58, B29L 31/10, B29L 31/00

(54) **A METHOD OF MANUFACTURE OF A FLAT LAMINATE CONSTRUCTION WITH A STIFFENING SYSTEM AND A FLAT LAMINATE CONSTRUCTION WITH A STIFFENING SYSTEM**

(30) Priority: 16.05.2020 PL 43396520
(71) Applicant: Konkol, Janusz, 14 -200 Ilawa (PL)
(72) Inventor: Konkol, Janusz, 14 -200 Ilawa (PL)
(74) Representative: Dziubinska, Joanna

(57) **Abstract**

The method of manufacture of a flat laminate construction with a stiffening system, is characterized by the fact that the structure is at least a single-piece one with a glued-in stiffening, and each panel has a grid glued into the sheathing while the sheathing is still in the mould; whereas the stiffening, which is attached to the instrumentation used for gluing the grid into sheathing placed in the mould is aligned until the terminals (attached to the mould of the sheathing) limiting the position of the stiffening in three dimensions, heightwise, widthwise and lengthwise are reached; and then the stiffening is glued into the sheathing, the panel with the grid is removed from the mould and the edges of the sheathing are trimmed and evened.

The flat laminate construction with a stiffening system, is characterized by the fact that the grid (1) is embedded in the sheathing of a panel (3), which is bonded with the sheathing of another panel by gluing, and by reinforcement made with glued-in clips (4); whereby the bottom side of the panel has a grate, which is made up by a divided grid (1) and connectors (5), joined with clips (4), which ensure the strength continuity of the entire structure.

## Description

The invention is a method of manufacture of a flat laminate construction with a stiffening system and the flat laminate construction with a stiffening system (a composite structure) designed for use as roofing, a wall, a deck, a bulkhead, or another flat, curved or spherical structure.

The composite structure, as invented, is made of any kind of resin and any kind of reinforcement. The composite structure manufactured as invented can be divided into smaller panels or can be one single piece.

There are various known designs which could be used as laminate (composite) roofs and there are different ways of manufacturing them.

There are known sheathing stiffenings (grids) made of foam core profiles. The foam core is glued to the sheathing (in the upside-down position while still in the mould) and covered with layers of laminate. This leads to inconveniences like the uneven external surface of the grid and large dimensional discrepancies.

The known solutions do not give a possibility of bonding the sheathing of individual roof panels while they are still in their moulds. To be bonded, they first need to be removed from the moulds. This causes problems with maintaining the geometry - having been removed from the mould, the sheathing is not rigid enough yet; problems with laminating the stiffening cores in the flat position and with handling the large flat structure after it has been made.

Patent no. 221191 protects a framework which contains a number of fixed panels and a number of opening panels. In that solution, each panel has a frame consisting of elements framing the panels between each other. The frame has the form of a profiled core.

In the new solution, as invented, each panel has a grid which is glued into the sheathing while the sheathing is still in the mould. This ensures the shape and strength of the roof panel and the repeatability. The panel (the sheathing with a glued-in grid) can be removed from the mould safely. In the solution, as invented, laminating is replaced with gluing. This speeds up the manufacturing process - the components of a panel as well as individual panels can be prefabricated. In this solution, as invented, the grid of a panel is attached to technological beams. The panels are then laid on the technological beams, on a large frame, in the standard position of the roof (the top of the sheathing up, the stiffening down). This ensures that the geometry of the product is maintained.

The solution and method, as invented, overcome the inconveniences caused by the current state of the art. The application of the solution and method, as invented, allows the construction of roofs, especially ones made of panels, which are robust and stable, and gives the possibility of controlling the shape of small and large components at every stage of the manufacture and during the assembly.

The use of the stiffening, connectors, and clips results in significant improvement in the rigidity of the structure, especially in case of roofs of a large surface area.

The essence of the method, as invented, is the fact that the structure is at least a single-piece one with a glued-in stiffening, and each panel has a grid glued into the sheathing while the sheathing is still in the mould; whereas the stiffening, which is attached to the instrumentation used for gluing the grid into sheathing placed in the mould is aligned until the terminals (attached to the mould of the sheathing) limiting the position of the stiffening in three dimensions, heightwise, widthwise and lengthwise are reached; and then the stiffening is glued into the sheathing, the panel with the grid is removed from the mould and the edges of the sheathing are trimmed and evened; while a flat laminate construction with a stiffening system according to the invention has a grid embedded in the sheathing of a panel, which is bonded with the sheathing of another panel by gluing, and by reinforcement made with glued-in clips; whereby the bottom side of the panel has a grate, which is made up by a divided grid and connectors, joined with clips, which ensure the strength continuity of the entire structure. The flat structure, as invented, enables the building of panel roofs, i.e. large, rigid flat structures. The use of the instrumentation necessary to construct the invention allows controlling the process of the building of a panel roof and ensures repeatability. This allows controlling the shape of large panel elements. The roof structure, as invented, divided into smaller panels with glued-in stiffening, joined with connectors and clips, allows the use of any number of longitudinal and transverse elements of the grid, ensures very high geometric repeatability, high-quality construction and precise assembly of the grid in the standard position (stiffening down).

In the solution, as invented, a single panel has a grid (1) on which the sheathing is seated (3). The grid (1) consists of longitudinal, transverse, or longitudinal and transverse stiffeners. The stiffeners can also be positioned diagonally. The sheathing (3) is permanently bonded with the grid (1) with an adhesive. For a single panel to be joined with another panel, the sheathing (3) of that panel has a protruding Z-shaped edge (2), which is a surface slightly lowered with respect to the sheathing (3) and which extends along the whole length of one side of the sheathing (3) and along the whole width of at least one side of the sheathing (3), and protrudes beyond the sheathing (3) so that the sheathing of another panel overlaps the Z-shaped edge (2) and joins the neighbouring panels. The panel which is placed on the Z-shaped edge of another panel (2) does not have a Z-shaped edge on that side (2). Such a panel ends on that side (the side with no Z-shaped edge) with a flat sheathing. Thanks to the Z-shaped edge (2) it is possible to bond the sheathing of two adjacent panels without any problems. The stiffeners of the panels, joined along the Z-shaped edge (2), are then bonded in the overhead position with clips (4) (or grid connectors and clips) whose cross section fits the shape of the stiffeners, i.e., the shape of a channel bar, an angle bar or a flat bar. The clips (4) bond the panels on each rib of the grid (1). The clips (4) which bond the panels provide the continuity of the strength to the entire structure. Before the clips (4) are fixed, two adjacent panels must be joined with a grid connector (5), which connects the panels along the joint of their sheathings. In the panels attached along the shorter sides, it is necessary to use the grid connectors in order to meet the requirement of functionality. In such a case, the panel grids are shortened (from the panel parting line). When the adjacent panels have been bonded, the grids are supplemented with a connector and bonded with clips on the joints to form a continuous whole.

The grid parting line (1) is the same as the axis of the clip (4). The sheathing parting line (3) is under the transverse stiffener.

To make a flat design, as invented, one panel (the left middle panel) must be placed on the large frame, on the positioning terminals. Then, the right middle panel must be placed on the large frame too and both middle panels must be aligned with each other. At the next stage the sheathing of both middle panels is bonded with an adhesive. Then, clips (4) must be fitted in and glued, joining the transverse stiffeners. This leads to the permanent bonding of the middle panels. To extend the construction lengthwise the rear panel must be placed on the large frame and aligned with the already bonded middle panels. Then, the sheathing of the bonded middle panels and the sheathing of the rear panel must be bonded with an adhesive. Afterwards, the grid connector (transverse and longitudinal stiffeners) (5) must be fitted in and glued, connecting the middle and rear panels, After gluing the connector (5), clips (4) must be fitted in and glued, joining the longitudinal stiffeners. At this stage, the previously bonded middle panels are permanently bonded with the rear panel. Similarly, it is possible to bond the front panel with the entire construction. First, it must be placed on the large frame and aligned with the previously bonded middle and rear panels. Then, the sheathing of the bonded middle and rear panels must be bonded with an adhesive with the sheathing of the front panel. Afterwards, the grid connector (5) must be fitted in and glued (transverse and longitudinal stiffeners), connecting the middle and front panels. Then, clips (4) must be fitted in and glued, joining the longitudinal stiffeners. At this stage the previously bonded middle and rear panels are permanently bonded with the front panel. Such a panel construction makes up a continuous whole.

In order to make a flat construction with the stiffening system, as invented, adequate instrumentation is necessary: moulds for the grid, frames, technological and transport beams, as well as minor tools for lifting, transporting and assembling. The instrumentation that ensures the maintenance of the shape of large parts of the grid after being removed from the mould is the deposit frames. The frames for gluing the grids into the sheathing provide the possibility of positioning the grids on the frame in a precise and repeatable position. The instrumentation for gluing the grid into the sheathing as well as the moulds for the grids are equipped with axes of rotation. The large frame allows the panels to be precisely positioned and glued.

The terminal is another element of the instrumentation. It is an aligning roller equipped with a plate with a compatible slot. The terminal determines the position of the tooling in all the three dimensions. The terminals mounted on the stiffening of the moulds for the sheathing of the panels ensure full repeatability of the position of the grid with respect to the sheathing. The technological and transport beams and the large frame allow handling the panels and positioning them precisely during the assembly.

The roof panels with the glued-in stiffening are prefabricated as follows.

The sheathing and the stiffening are laminated separately. The longitudinal, transverse or diagonal stiffeners make up the grid. After laminating and removing the grid (the stiffening) from the mould, it is deposited on the deposit frame. The stiffening (the grid) must then be fitted with additional elements like pipes, cable penetrators, fixings, and other items known from the current state of the art, indispensable for the further installation of equipment, and placed on the instrumentation for gluing the grid into the sheathing of the panel. At the next stage, the stiffening, attached to the instrumentation for gluing the grid into the sheathing, is aligned with the sheathing which is still in the mould until the terminals limiting the position of the stiffening in three dimensions, heightwise, widthwise and lengthwise, are reached. This is followed by gluing the grid into the sheathing, clearing the surface of the sheathing and the grid, topcoating adequate surfaces and fixing the technological and transport beams to the grid. The panel with the grid glued into the sheathing is then removed from the mould, the edges of the sheathing are trimmed, evened and topcoated and the construction is conditioned in order to achieve the specified technical parameters. The conditioning is performed by heating the panel in a heating chamber to achieve the specified technical parameters of the composite (the resin).

Each panel, as invented, is prefabricated in the same way. Other elements of the grid, such as connectors, clips, and other small items, can also be prefabricated.

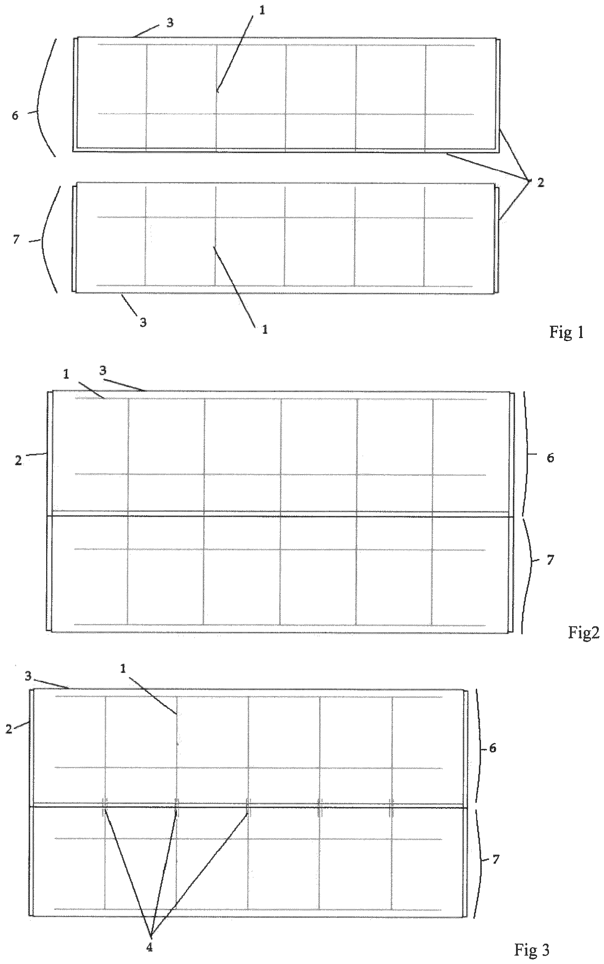

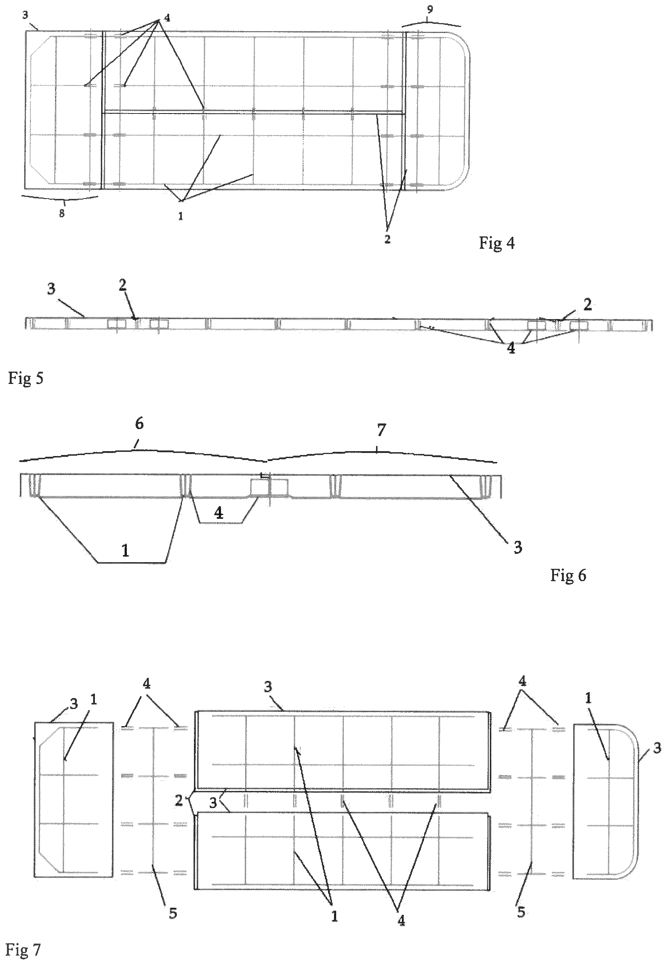

The flat construction with the stiffening system, as invented, is shown in the enclosed illustrations, Fig. 1 - 11b.
Fig. 1 shows two middle panels with the stiffening and the Z-shaped edge.
Fig. 2 shows aligned middle panels with the stiffening and the Z-shaped edge.
Fig. 3 shows aligned middle panels bonded with clips, with the stiffening and the Z-shaped edge.
Fig. 4 shows an assembled four-panel roof.
Fig. 5 shows the longitudinal section of a panel roof.
Fig. 6 shows the cross section of a panel roof.
Fig. 7 shows individual elements of a four-panel roof.
Fig. 8 shows two joined middle panels and the rear panel before joining.
Fig. 9 a shows the rear panel attached to the middle panels.

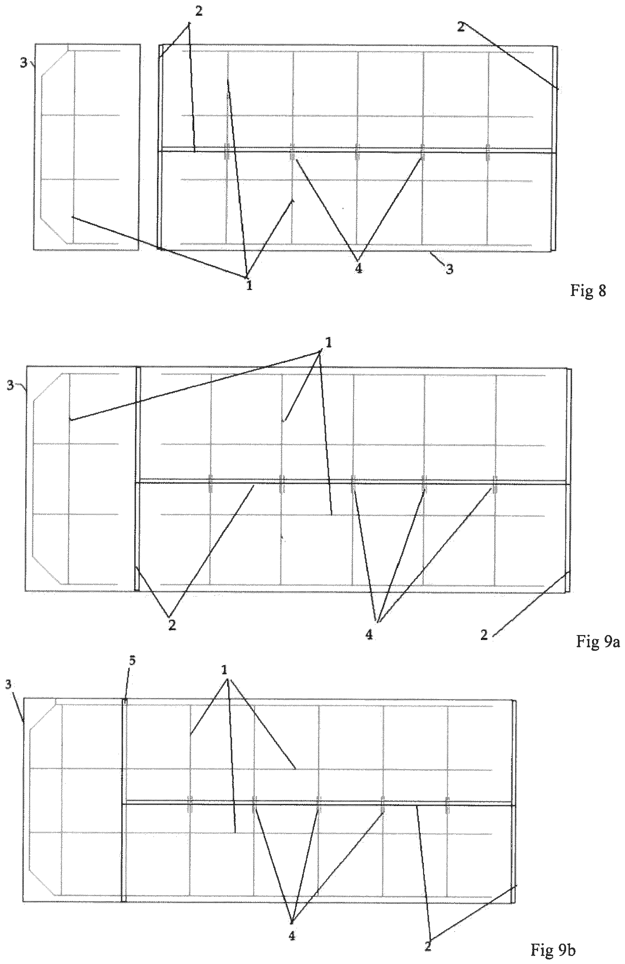

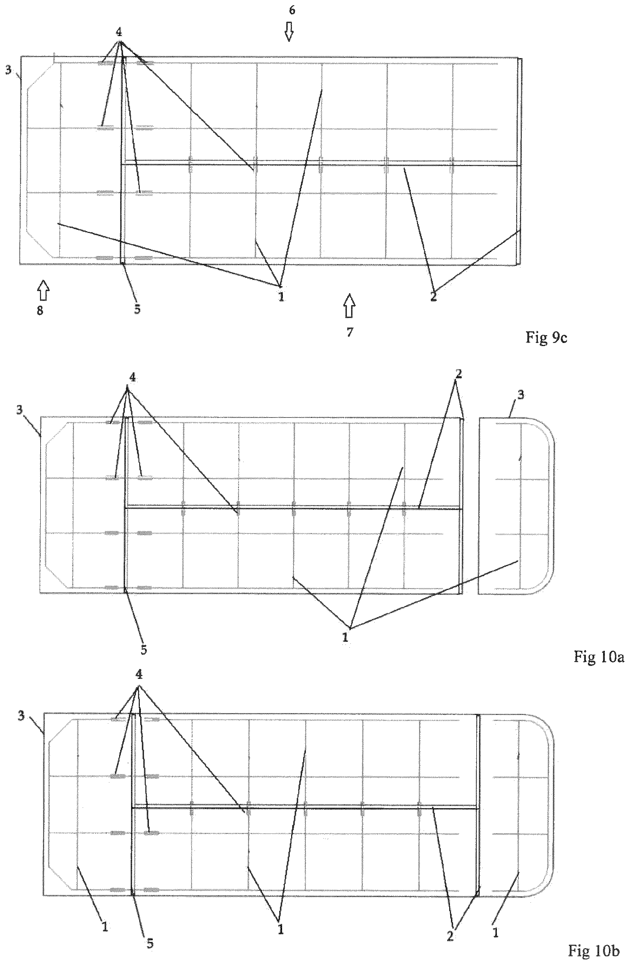

Fig. 9 b shows three panels bonded by gluing the connector between the middle and rear panels.
Fig. 9 c shows the last stage of the assembly of a three-panel roof - gluing clips.

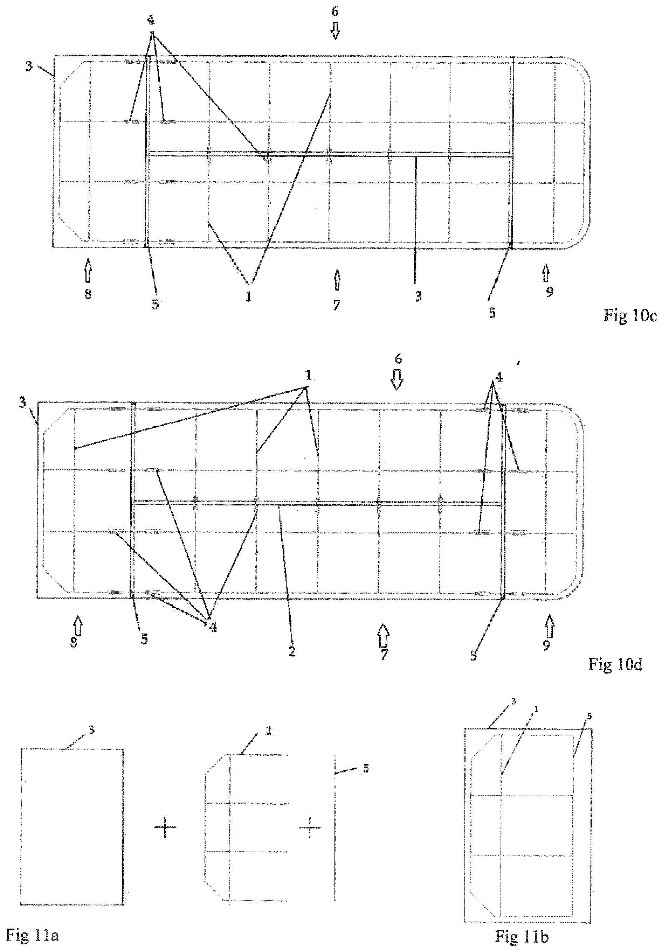

Fig. 10 a shows three bonded panels - two middle ones and the rear one - before bonding with the front one.
Fig. 10 b shows the front panel attached to the middle ones, which were previously bonded with the rear one.
Fig. 10 c shows four panels joined by the connector between the middle and front panels.
Fig. 10 d shows the last stage of the assembly of a four-panel roof - gluing clips.
Fig. 11 a - b shows particular stages of the assembly of elements of a single-piece roof.

The flat laminate construction with a stiffening system, as invented, and the method of the manufacture are shown in the examples below, which do not limit the invention.

### Example 1

A flat design with two middle panels (left and right) and the front and rear panels.

The left middle panel (6) is placed on the large frame on the positioning terminals. Then, the right middle panel (7) is also placed on the large frame. Both middle panels are aligned with each other by lapping the right middle panel (7) over the Z-shaped edge (2) protruding from under the left middle panel. Then, the sheathing of both middle panels (6) and (7) is bonded with an adhesive. Next, clips (4) must be fitted in and glued, joining the transverse stiffeners. This way both middle panels (6) and (7) are permanently bonded together. The next step is to place the rear panel (8) on the large frame and align it with the previously bonded middle panels (6) and (7) by lapping the rear panel (8) over the Z-shaped edge (2) protruding from under the bonded middle panels (6) and (7). Then, the sheathing of the bonded middle panels and the rear panel (8) must be bonded with an adhesive. After bonding the sheathing, the grid connector (5) must be fitted in and glued (transverse and longitudinal stiffeners), connecting the middle and rear panels. After gluing the connector (5), clips (4) must be fitted in and glued, joining the longitudinal stiffeners. This way the middle panels are permanently bonded with the rear panel. In the same way, the panel construction must then be bonded with the front panel (9). First, the front panel (9) must be placed on the large frame and aligned with the previously bonded middle and rear panels. The alignment is done by lapping the front panel (9) over the Z-shaped edge (2) protruding from under the joined middle panels (6) and (7). After that, the sheathing of the bonded middle panels (6) and (7) and rear panel (8) must be bonded with an adhesive (8) with the sheathing of the front panel (9). Next, the grid connector (5) must be fitted in and glued (transverse and longitudinal stiffeners), connecting the middle and front panels. Finally, clips (4) must be fitted in and glued, joining the longitudinal stiffeners. This way the middle and rear panels are permanently bonded with the front panel. A four-panel roof, constructed in this way, is assembled as a whole and makes up a continuous construction.

### Example 2

A flat design with two middle panels (left and right), the front and rear panels and an insert between the middle panels.

A design as in example 1, in which a central middle panel is inserted between the left and right middle panels, which results in a wider and bigger roof construction.

### Example 3

A single-piece flat design - not split into panels but with a glued stiffening.

First, the sheathing of the element and parts of the grid are prefabricated. Then, the stiffening (the grid) must be reinforced and placed on the instrumentation for gluing the grid into the sheathing of the panel. At the next stage, the stiffening, attached to the instrumentation for gluing the grid into the sheathing, is aligned with the sheathing, which is still in the mould, until the terminals limiting the position of the stiffening in three dimensions, heightwise, widthwise and lengthwise, are reached. This is followed by gluing the grid into the sheathing - the grid (1) of a single-piece structure must be glued into the sheathing (3) and reinforced with a connector (5). The panel with the grid glued into the sheathing is then removed from the mould, the edges of the sheathing are trimmed, evened and topcoated, and the panel is heated in a heating chamber to achieve the specified technical parameters of the composite (the resin).

### Legend:

1 - grid
2 - Z-shaped edge
3 - sheathing
4 - clip
5 - connector
6 - left middle panel
7 - right middle panel
8 - rear panel
9 - front panel

## Claims

1. The method of manufacture of a flat laminate construction with a stiffening system, in which the components are joined, stiffened and removed from the mould, is **characterized by** the fact that the structure is at least a single-piece one with a glued-in stiffening, and each panel has a grid glued into the sheathing while the sheathing is still in the mould; whereas the stiffening, which is attached to the instrumentation used for gluing the grid into sheathing placed in the mould is aligned until the terminals (attached to the mould of the sheathing) limiting the position of the stiffening in three dimensions, heightwise, widthwise and lengthwise are reached; and then the stiffening is glued into the sheathing, the panel with the grid is removed from the mould and the edges of the sheathing are trimmed and evened.

2. The flat laminate construction with a stiffening system, made up by panels consisting of a sheathing, a stiffening (a grid), grid connectors, grates, is **characterized by** the fact that the grid (1) is embedded in the sheathing of a panel (3), which is bonded with the sheathing of another panel by gluing, and by reinforcement made with glued-in clips (4); whereby the bottom side of the panel has a grate, which is made up by a divided grid (1) and connectors (5), joined with clips (4), which ensure the strength continuity of the entire structure.

## Amended claims

### Amended claims in accordance with Rule 137(2) EPC.

1. The method of manufacture of a flat laminate construction with a stiffening system, in which components are joined, stiffened and removed from the mould, is **characterized by** the fact that panels has a grid (1) glued into sheathing (3) while the sheathing (3) is still in mould; whereas the stiffening, which is attached to instrumentation used for gluing the grid into sheathing (3) placed in the mould is aligned until terminals (attached to the mould of the sheathing) limiting the position of the stiffening in three dimensions, heightwise, widthwise and lengthwise are reached; and then the stiffening is glued into sheathing, panel with grid (1) is removed from the mould and edges of the sheathing (3) are trimmed and evened, wherein when the adjacent panels have been bonded, the grids are supplemented with a connector and bonded with clips on the joints to form a continuous whole.

2. The flat laminate construction with a stiffening system, made up by panels consisting of a sheathing, a stiffening (a grid), grid connectors, grates, is **characterized by** the fact that the grid (1) is embedded in the sheathing of a panel (3), which is bonded with the sheathing of another panel by gluing, and by reinforcement made with glued-in clips (4); whereby bottom side of the panel has a grate, which is made up by a divided grid (1) and grid connectors (5), joined with clips (4), which ensure the strength continuity of the entire structure, wherein for a single panel to be joined with another panel, the sheathing (3) of that panel has a protruding Z-shaped edge (2).
